(19) Europäisches Patentamt
European Patent Office
Office européen des brevets

(11) **EP 4 700 720 A1**

(12) **EUROPEAN PATENT APPLICATION**

(43) Date of publication:
**25.02.2026 Bulletin 2026/09**

(21) Application number: **25196851.7**

(22) Date of filing: **19.08.2025**

(51) International Patent Classification (IPC):
*G06V 20/56* *(2022.01)*

(52) Cooperative Patent Classification (CPC):
**G06V 20/56**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.08.2024 US 202418812859**

(71) Applicant: **Transportation IP Holdings, LLC
Norwalk, CT 06851 (US)**

(72) Inventor: **Spencer, Daniel Tuttle
Norwalk, 06851 (US)**

(74) Representative: **K&L Gates LLP
Karolinen Karree
Karlstraße 12
80333 München (DE)**

(54) **SYSTEM AND METHOD OF OFF-BOARD OBJECT DETECTION BY A VEHICLE**

(57) A control circuit that receives first image data from a first camera on a vehicle. The circuit, using the first image data, determines a first in-focus region defined by a first depth of field (DoF) within a first image frame. The control circuit detects an object in the first in-focus region. The control circuit receives second image data from a second camera on the vehicle. Using the second image data, the control circuit detects the object in a second in-focus region, defined by a second DoF, within a second image frame based on the first image data. The second DoF may be greater than the first DoF. The control circuit determines a characteristic of the object from the second image data, and may operate the vehicle using the vehicular operational data.

FIG. 1

EP 4 700 720 A1

## Description

## BACKGROUND

Technical Field

The subject matter described herein relates to systems and methods that identify and determine locations of objects offboard of vehicles.

Discussion of Art

Vehicles may traverse an environment composed of static and dynamic objects. Static objects may be those that do not appreciably change in appearance or location over time. Dynamic objects may change their appearances or location over a time frame, for example on the order of the motion of the vehicle. Non-limiting examples of static objects may include buildings, trees, rocks, signposts along side of a path taken by the vehicle. Additional static objects may include tunnels through which the vehicle may travel, and bridges over which it may cross. Non-limiting examples of dynamic objects may include other vehicles either traveling along the same path as the vehicle or potentially crossing the path of the vehicle, animals, and people.

The vehicle may operate in one of a number of potential modes. For example, the vehicle may operate in an automated mode, a semi-automated mode, or in a manual mode. In an automated mode, the vehicle may operate under the control of a control circuit which may be onboard the vehicle or off-board the vehicle. In a semi-automated mode, the vehicle may operate under the control of the control circuit while supervised by an operator. In a manual mode, the vehicle may operate under the control of the operator. Regardless of the mode of operation, the operation of the vehicle may be responsive to its environment, including the static and dynamic objects that may be encountered by the vehicle either while traveling along its path or at rest. The response of the vehicle may at least in part be determined by recognizing an object - either static or dynamic - and determining its distance from the vehicle. It may be desirable to have a system and method that differs from those that are currently available.

## SUMMARY

In one aspect, a vehicle may include one or more optical systems that can recognize an object in the vicinity of the vehicle, and to determine a distance of the object to the vehicle. Such one or more optical systems may acquire image data of the vehicle environment. In some examples of the one or more optical systems, the optical systems may include a two-dimensional sensor which may include a number of optically active pixels arranged in a two-dimensional array. While the two-dimensional pixel array may be able to resolve height and length measures of objects presented in the image data, the two-dimensional arrays may have difficulty in determining distance measures of the objects in the image data. Disclosed herein are optical systems and methods to both determine an object imaged in the vehicle's environment and determine distance measures of the objections to the vehicle.

In one aspect, a system may include a control circuit having a processor and a memory unit. The memory unit may include instructions that, when executed by the processor, cause the processor to receive first image data captured by a first camera disposed on a vehicle. The memory unit may include instructions to detect an object in a first in-focus region within a first image frame defined by the first image data, the first in-focus region based on a first depth of field (DoF). The memory unit may include instructions to receive second image data captured by a second camera disposed on the vehicle. Based on the first image data, the memory unit may include instructions to detect the object in a second in-focus region within a second image frame defined by the second image data. The second in-focus region may be based on a second DoF greater than the first DoF. The memory unit may include instructions to determine a characteristic of the object from the second image data, and transmit to a controller of the vehicle, vehicular operational data based at least in part on the determined characteristic of the object.

In another aspect, a method may include receiving, by a control circuit, first image data captured by a first camera disposed on a vehicle, detecting, by the control circuit, an object in a first in-focus region within a first image frame defined by the first image data, in which the first in-focus region based on a first depth of field (DoF). The method may further include receiving, by the control circuit, second image data captured by a second camera disposed on the vehicle. The method may additionally include detecting, by the control circuit, based on the first image data, the object in a second in-focus region within a second image frame defined by the second image data, the second in-focus region based on a second DoF greater than the first DoF. The method may further include determining, by the control circuit, a characteristic of the object from the second image data, and transmitting, by the control circuit to a controller of the vehicle, vehicular operational data determined at least in part by the characteristic of the object.

## BRIEF DESCRIPTION OF THE DRAWINGS

The subject matter disclosed herein may be understood from reading the following description of non-limiting aspects, with reference to the attached drawings, wherein below:

FIG. 1 is a schematic of a vehicle including an optical system for detecting an off-board object of the vehicle, according to one aspect of the disclosure;

FIG. 2A is a schematic of an optical system for detecting an off-board object as disposed on the vehicle, according to one aspect of the disclosure;

FIG. 2B is a schematic of an imaging device for acquiring image data from an off-board object, according to one aspect of the disclosure;

FIG. 3 is a schematic depiction of an optical focus and a perceptual focus of an object, according to one aspect of the disclosure

FIG. 4A illustrates an operation of an optical detector of the optical system having a narrow depth of field, according to one aspect of the disclosure;

FIG. 4B illustrates an operation of an optical detector of the optical system having a wide depth of field, according to one aspect of the disclosure; and

FIG. 5 is a flow chart of a method for detecting an object and determining its distance from the vehicle, accord to one aspect of the disclosure.

DETAILED DESCRIPTION

The subject matter described herein relates to systems and methods that identify and determine information about objects offboard of vehicles, such as locations of those objects.

Further, a vehicle traversing its environment may recognize and adapt its operations to objects located in that environment. Regardless of the operational mode of the vehicleautomated mode, semi-automated mode, or manual mode - control of the vehicle may be based, at least in part, on information regarding the environment and object locations. In one aspect, the environmental information may be obtained optically, using one or more optical systems. In one aspect, the optical system may include a camera having an optical axis generally oriented in the direction of travel of the vehicle. In some examples, the camera may have a wide field of view to capture images of multiple objects in front of or around the direction of travel of the vehicle. Such wide fields of view optical systems may allow the image to have in-focus regions of multiple objects over a wide range of distances from the vehicle. While wide field of view images may present multiple objects in a context of the vehicle environment, distance information regarding many of the objects may be lost. Because vehicle-object distances may be important for effective response by the vehicle, additional methods and systems may be used to obtain distance information of the objects viewed in a wide field of view optical system. The present disclosure is directed to systems and methods to obtain both contextual information of objects off-board the vehicle, and to provide distance information related to the objects as well.

In one aspect, a system may include a control circuit having a processor and a memory unit. The memory unit may contain instructions that, when executed by the processor, cause the processor to receive first image data captured by a first camera disposed on a vehicle, detect an object in a first in-focus region within a first image frame defined by the first image data, the first in-focus region based on a first depth of field (DoF), and receive second image data captured by a second camera disposed on the vehicle. Based on the first image data, the processor may detect the object in a second in-focus region within a second image frame defined by the second image data, the second in-focus region based on a second DoF greater than the first DoF, determine a characteristic of the object from the second image data, and transmit to a controller of the vehicle, vehicular operational data based at least in part at least in part on the determined characteristic of the object.

In one aspect, a vehicle may include a discrete vehicle that is not physically connected to any other vehicles during operation. In other aspects, other vehicles may be mechanically coupled to one or more other vehicles, such as one or more trailers, non propulsion-generating rail cars, and the like, to form a vehicle system. Even if the vehicle is not mechanically connected to any other vehicle, the vehicle may still communicate with at least another vehicle to coordinate movements so that the vehicles move together as a vehicle system (e.g., in a convoy). As used, the term convoy here is functionally interchangeable with other like terms, such as consist, swarm, platoon, fleet, train, and other vehicle groupings.

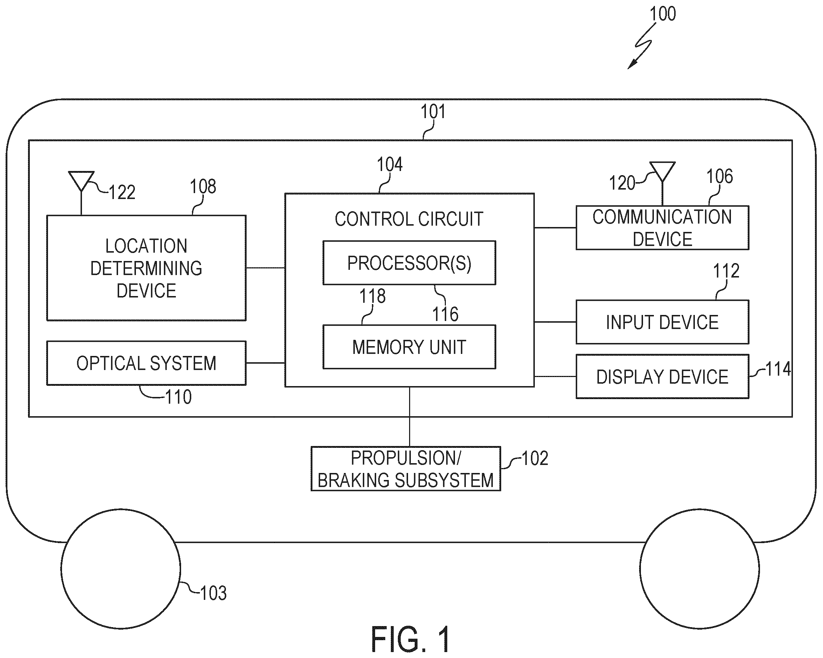

In one aspect, the vehicle may be a rail vehicle and may be part of a vehicle group that forms a train that travels over a route. A suitable route or path may include railroad tracks, and a suitable rail vehicle may be a locomotive. Another suitable vehicle may be a truck. Suitable trucks may include a highway capable semi-truck, mining truck, logging truck, and the like. The vehicle in other examples may include one or more other types of vehicles such as automobiles, aircraft, buses, agricultural vehicles, marine vessels, mining vehicles, and/or other off-highway vehicles (e.g., vehicles that are not legally permitted and/or are not designed for travel on public roadways). FIG. 1 depicts a schematic of one aspect of a vehicle **100** including an optical system for detecting an off-board object of the vehicle.

The vehicle may have a control system **101** and a propulsion and braking subsystem **102** for propelling the vehicle along a route or path and actively slowing or stopping the vehicle. The control system may include a control circuit **104,** a communication device **106,** a location determining device **108,** an optical system **110,** an input device **112,** and a display device **114.** The control circuit may be operably connected to the communication device, the location determining device, the optical system, the input device, and the display device via wired and/or wireless communication pathways. The control circuit may be operably connected to the propulsion and braking subsystem of the vehicle. A suitable control circuit may be disposed onboard the vehicle and (unless specified otherwise, both onboard and off-board control circuits may be referred to herein as a control circuit) may perform at least some of the operations described herein to determine the identities and locations of offboard objects and audit a digital map file of the environment. The control circuit represents hardware circuitry that includes and/or is connected with one or more processors **116** (e.g., one or more microprocessors, image processors, mathematical calculation accelerators, integrated circuits, microcontrollers, field programmable gate arrays, etc.). The control circuit may include and/or be connected with a tangible and non- transitory computer-readable storage medium (e.g., memory unit) **118.** The memory unit may be disposed onboard the vehicle. The memory unit may store programmed instructions (e.g., software) that may be executed by the one or more processors to perform the operations of the control circuit described herein. The memory unit additionally or alternatively may store different information, such as image data generated by the optical system, a digital map file **119** of the surrounding environment, a route database, a trip schedule, a vehicle makeup or manifest, and the like.

Terms such as "processing" or "computing" or "calculating" or "determining" or "displaying" and the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The map file may include identities of offboard features, such as wayside assets, in the surrounding environment near the route and archival locations of the features. The features may be static (e.g., stationary), unless the features are actively being installed, moved, or removed. Suitable features of interest may include one or more of infrastructure, infrastructure equipment, mile post markers, beacons, landmarks, signage, derail devices, wayside equipment, navigation hazards, and the like. The infrastructure equipment can include route signal devices, powerlines, catenary lines, communication towers, and track switches. The infrastructure can include route crossings, intersections, bridges, overpasses, buildings, water towers, tunnels, hill crests, and the like. Suitable features may be permanent, semi-permanent, or transitory features. Suitable navigation hazards may include waterfalls, rockslides, lakes, rivers, islands, washed out areas, and the like. Suitable signage may include standard signs found near routes (rail, automotive, marine, and other routes) as well as special purpose signs. A special purpose sign may be used with a barcode, for example, that contains information that allows for calibration of the controller. The special purpose sign may be a static sign configured to indicate a precisely known location to the controller and can thus help the controller calibrate the image analytics. As an example, a dynamically-generated 3D barcode may supply information to the control circuit regarding the vehicle speed, the distance from the sign to the camera, environmental conditions, and the like. If the special purpose sign is fitted with a communication device and memory, the control circuit may relay route and feature information to the special purpose sign so that it can in turn relay that information to subsequently passing vehicles.

A suitable map file may include a database of features of interest with associated archival locations for those features. The archival location for a corresponding feature of interest may represent the last-known location of that feature in the environment. The archival locations may be represented by coordinates in a coordinate system. In one aspect, the coordinate system may use GPS coordinates while in another aspect there may be vector or inertial location systems. As an example, an archival location may be characterized by a longitude component, a latitude component, and optionally an altitude component. In one aspect, a suitable map may be dynamically created using a sensor and communication network.

A suitable communication device may represent hardware circuitry that can communicate electrical signals, and may function wirelessly. For example, the communication device can represent transceiving circuitry, one or more antennas **120,** and the like. The transceiving circuitry may include a transceiver or a separate transmitter and receiver. Electrical signals received or transmitted by the transceiving circuity may form data packets that in the aggregate represent messages. In an aspect, the communication device may be a radio that wirelessly communicates the electrical signals as radio frequency (RF) signals. The communication device can transmit or broadcast messages that are generated by the control circuit. The communication device may receive messages and forward them to the control circuit for analysis of the received messages.

The location determining device may determine the respective location of the vehicle at a given time. The location determining device can include a receiver, at least one antenna **122,** and associated circuitry. The location determining device may receive signals from satellites. A suitable location determining device may be a GNSS receiver (e.g., a global positioning system (GPS) receiver) that generates data indicative of a location (e.g., a three-dimensional positional coordinate) for the vehicle within a global coordinate system based on signals received from satellites. In an alternative aspect, the location determining device can determine the respective location based on other mechanisms, such as using signals received from wayside devices, by tracking the direction and distance traveled from a checkpoint location that has determined or assigned coordinates, from a dead reckoning system, and the like.

A suitable display device can be an integrated display screen onboard the vehicle and/or a display screen on a personal, tablet, handheld (e.g., smartphone), or wearable (e.g., smartwatch) computer. The display device may display visual information to a human operator concerning the movement of the vehicle. The control circuit may utilize the display device to provide a recommended course of operation or control strategy to the human operator, which the operator can select using the input device. Optionally, the control circuit may display a notification message on the display device that indicates that the controller has detected an inconsistency in the digital map with respect to the locations of offboard features.

A suitable propulsion and braking subsystem of the vehicle may represent the hardware components and any associated software used to provide work for propelling and slowing the vehicle along the route. A suitable propulsion system can include one or more traction motors, inverters, combustion engines, battery systems, air brake systems, friction brake systems, dynamic or regenerative brake systems (e.g., using motors), and the like. In the illustrated aspect, the propulsion is provided by exerting a torque on wheels **103** of the vehicle to rotate the wheels relative to the route.

A suitable input device can be an onboard instrument panel, hand brake, steering wheel, throttle lever, throttle and/or brake pedal, computer, tablet computer, handheld computer, keyboard, touchpad, joystick, and the like and may enable a human operator to interact with the onboard controller and control operations of the vehicle.

In one or more aspects, the control circuit may receive and analyze the image data that is generated by the optical system. The control circuit may perform a localization algorithm, as described herein, to identify and determine the location of one or more objects depicted in the image data. The objects may be offboard the vehicle within the surrounding environment, and may be static (e.g., stationary, non-moving) or dynamic (moving, or potentially moving). The output of the localization algorithm (e.g., the identities and locations of offboard objects) can be used to audit the digital map.

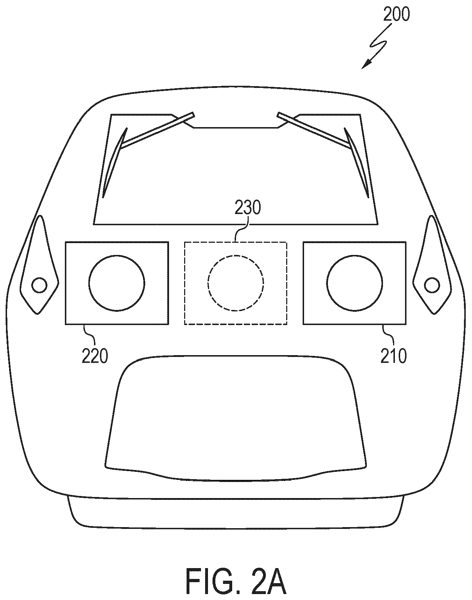

The optical system may include optical components to obtain optical data from at least part of the physical environment outside of the vehicle. FIG. 2A is a schematic of an optical system **200** for detecting an offboard object. The vehicle may include an optical system composed of multiple imaging devices. In some examples, the optical system may be mounted to the vehicle at a front of the vehicle, according to a direction of travel, and oriented forward to view the upcoming segment of the route traveled by the vehicle. The optical system may be mounted to a roof, a hood, a front panel, a windshield, or a side panel of the vehicle at or near the front of the vehicle. Alternatively, the optical system may be mounted at another location, such as inside a cab of the vehicle or underneath a chassis of the vehicle. Optionally, the vehicle may have multiple optical systems mounted at different locations onboard the vehicle, the multiple optical system having optical axes oriented to capture at least part of the physical environment outside of the vehicle.

The imaging devices may generate optical data of the environment within the field of view. The optical data may be referred to herein as image data. The image data can be used to generate single images and/or multiple images (video images) in one or more wavelength ranges, such as the visible range, infrared, ultraviolet, and the like. The image data may be stored in the onboard memory unit for analysis by the onboard control circuit and/or remotely communicated via the communication device for analysis by an offboard control circuit.

The imaging devices may include one or more cameras, such as a video camera that can generates image data at a designated or selected frame rate, for example the number of individual images generated per second. The one or more cameras may generate image data in the visible wavelength range, and optionally may generate image data in the ultraviolet range and/or infrared range. The image data may be transmitted as signals to the control circuit for analysis of the image data and/or packing the image data into one or more messages to be remotely communicated to an offboard device.

As illustrated in FIG. 2A, the optical system may include one or more imaging devices. For example, the optical system may include one or more cameras (**210**, **220**, **230**). The one or more cameras may have similar construction and may have similar features. Alternatively, the one or more cameras may differ in some of their construction or features. For example, a first camera **210** may generate image data having in focus regions based on a wide depth of field (DoF). In another example, a second camera **220** may generate image data having in focus regions based on a narrow DoF. Suitable optical system may optionally include additional cameras, such as third camera 230. Each of the cameras may have features defined, in part, by the direction and orientation of the optical axis of of their respective lenses. In some examples, the first camera and the second camera may have respective optical axes that may be horizontally coplanar. In some other examples, the third camera may have an optical axis that may diverge vertically from either or both optical axes of the first camera and the second camera.

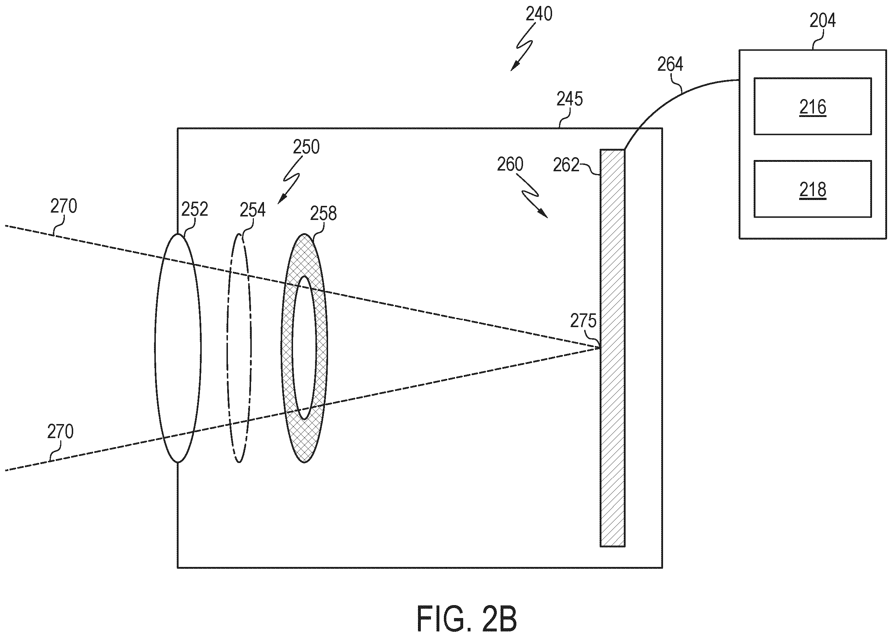

FIG. 2B is a schematic of an imaging device **240** for acquiring image data from an off-board object. Examples of such an imaging device may be found in first, second, and third cameras. The imaging device may include, without limitation, a housing **245,** an image detector **260,** and one or more optical components, for example one or more lenses **252,** and one or more apertures **258.** The imaging device may optionally have one or more filters **254.** The image detector may be an electronic device composed of an imaging sensor **262,** and one or more electronic components **264** to receive image data from the imaging sensor and/or to receive imaging sensor control data to control one or more operations of the imaging sensor.

A suitable imaging sensor may be a CCD detector, a CMOS detector, an image intensifier, or a color imaging detector. Image control data may include data to adjust the gain of the imaging sensor, control a rate of image capture, and the like. The electronic components may include communication components that can allow communication of data - such as image data and image control data -- between the imaging sensor and an image control circuit **204.** The image control circuit may receive image data from the imaging sensor and to transmit imaging sensor control data to the imaging sensor. In one aspect, the control circuit may include one or more processors **216** and one or more memory units **218.** The memory units may include instructions that, when executed by the processor, cause the processor to process the image data as disclosed further below.

The imaging device may have a single lens, as illustrated, or multiple lenses. The one or more lenses may include coatings such as an anti-reflection coating or an anti-glare coating. The aperture may have a fixed diameter. Alternatively, the aperture may be adjustable either manually or under automatic control. Filters may include color filters, neutral density filters, polarizing filters and the like. Although the imaging device depicted in FIG. 2B illustrates one ordering of the optical components, the order of the optical components - lenses, filters, and apertures - may depend on the construction of the imaging device and other application specific parameters.

The imaging device may receive light **270** from the vehicle environment and to focus it, through the optical components, on the imaging sensor. Thus, images of objects may be focused on the imaging sensor. An image may be considered "in focus" either in an optical sense or in a (human) perceptual sense. In the optical sense, a lens may have a focal length d defining a focal plane at distance d from the lens. Objects intersected by the focal plane may have edges in the focal plane that are sharp and well defined. From the perspective of an imaging sensor, the edges in the focal plane may be narrow, defined by one or a few pixels in width. In the perceptual sense, a human eye may not be as precise in determining an optical focus and may find objects to be in focus that are outside the focal plane. A depth of field may include an area surrounding the focal plane that may be in perceptual focus for a human observer. The depth of field may be defined by two planes, parallel to and on opposite sides of the focal plane separated by a distance (or width) δ. The depth of field may correspond to an uncertainty in determining the distance between a human observer and the object based solely on the perceptual focus.

In one aspect, the depth of field (DoF) may be calculated using the formula:

$$Eq.\ 1. \qquad DoF = \frac{2u^2Nc}{f^2}$$

in which the focal length or distance is f, the aperture or f-stop number is N (a dimensionless number), the distance to the object is u, and the circle of confusion (a radius measure) is c. The circle of confusion may provide a relationship between the optical focus and the perceptual focus. As disclosed above, an object may be in perceptual focus if it is within the depth of field, defined by the region surrounding the focal plane. For a narrow depth of field, δ may be small, and only images of objects within a small distance from the focal plane may be in focus. Conversely, for a wide depth of field, δ may be large, and images of objects within a large distance from the focal plane may be in focus. Hence, the distance to an in-focus object viewed with a camera having a narrow depth of field may be better determined than the distance of an in-focus object viewed with a camera having a wide depth of field. Images obtained by a narrow depth of field camera may have fewer in-focus objects, and therefore lack the environmental context of the objects, than images obtained by a wide depth of field camera.

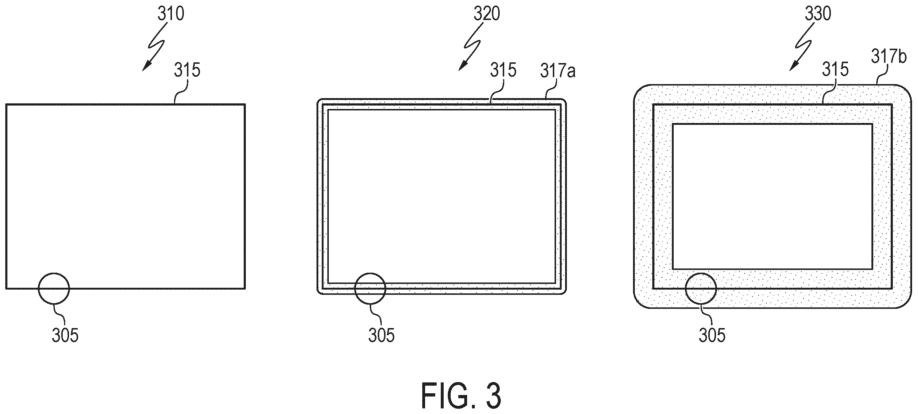

FIG. 3 illustrates a relationship between optical focus and the perceptual focus. An object in optical focus **310** may be defined by a sharp optical focus edge **315,** which may appear to be about 1-3 pixels wide in an imaging sensor. A circle of confusion **305** may completely surround the optical focus edge. An object in perceptual focus **320** may include the optical focus edge and a perceptual focus edge **317a.** The combined edge of the object in perceptual focus may have a larger edge on an imaging sensor but may still appear sharp to a human observer (that is, the perceptual focus edge may still lie within the circle of confusion). An object out of perceptual focus **330** may include the optical focus edge and a perceptual focus edge **317b.** The combined edge of the object out of perceptual focus may have a large edge on an imaging sensor and the edge may appear blurred to a human observer (that is, at least a portion of the perceptual focus edge may lie outside the circle of confusion).

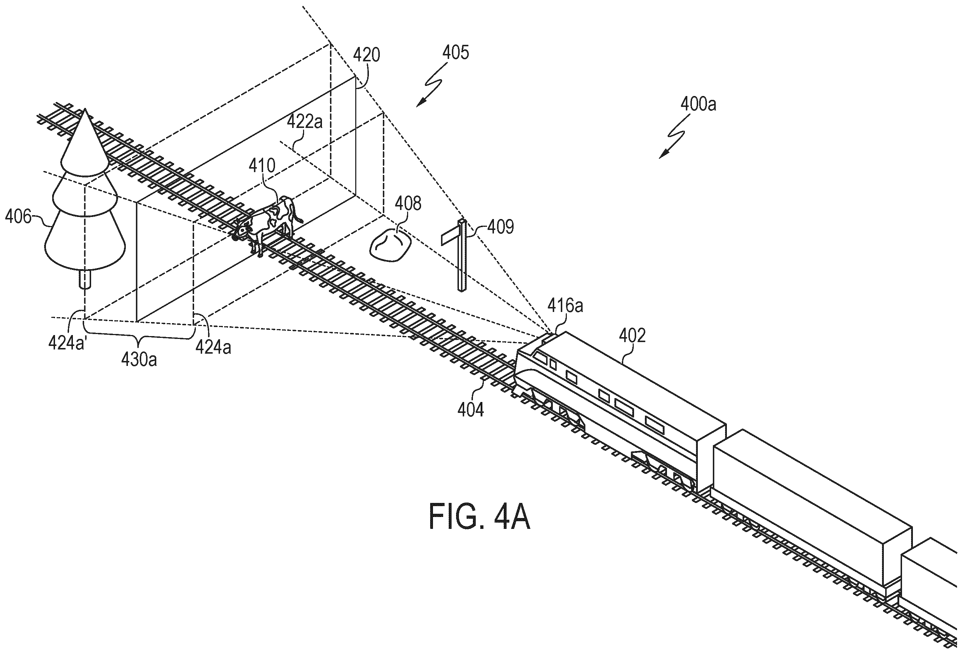

FIG. 4A illustrates an operation of an optical detector of the optical system having a narrow depth of field **400a.** FIG. 4A depicts a vehicle **402** that may travel along a path **404.** In one aspect, the path may be a fixed path along which the vehicle may be constrained to traverse. Alternatively, the path may not be fixed, and the vehicle may traverse the path without constraint, for example a marine vehicle in or under water. The vehicle may operate within an environment **405.** The environment may include multiple objects, including static objects and dynamic objects. Non-limiting, and representative examples of static objects may include one or more trees **406,** rocks **408,** signposts **409,** and the path itself. As disclosed above, static objects may generally be considered objects that do not change their position over a time frame relevant to an operation of the vehicle in the environment. The environment may also include dynamic objects that may change their positions over the time frame relevant to an operation of the vehicle in the environment. Dynamic objects may include, without limitation, other vehicles either traveling along the same path as the vehicle or potentially crossing the path of the vehicle, animals **410,** and people.

The vehicle may include an optical system, for example a first camera **416a** disposed thereon. The first camera may receive light from the environment, the light being directed by the optical components of the first camera onto the first camera imaging sensor. The light directed on the first camera imaging sensor may be converted to a first image frame defined by first image data by the first camera. A lens of the first camera may have a focal length **422a** defining a focal plane **420.** In some non-limiting examples, the focal length of the first camera may be about a distance traveled by the vehicle traveling at a maximum rated speed in the tie required for the system to take an action upon identification of an object. As one example, the depth of field may be calculated using the formula

$$Eq.\ 2. \qquad DoF = 2 * \frac{v_{max}}{frame\_rate}$$

in which $v_{max}$ is the maximum speed of the vehicle and *frame_rate* is the rate of acquisition of an image by the camera. Therefore, in an example of a vehicle having a rated maximum speed of 120mph = 176 ft/s and a camera having a frame rate of 30 frames per second, a camera having a DoF of 11.73 feet may be used. Alternatively, for a vehicle having a rated maximum speed of 75mph = 110 ft/s and a camera having a frame rate of 120 frames per second, a camera having a DoF of 1.83 feet may be used. Similar calculations may be made for vehicles having different rated maximum speeds and for camera systems having different frame rates. The focal plane may intersect with any of the static or dynamic objects within the environment. As illustrated in FIG. 4A, the focal plane may intersect with the animal disposed on the path. The optical components of the first camera may define a first depth of field **430a.** As discussed above, the depth of field may be defined by planes (**424a**, **424a'**) parallel to and on opposing sides of the focal plane. As the width of the depth of field increases, more objects within the depth of field may appear in-focus in the image frame. Similarly, as the width of the depth of field decreases, fewer objects within the depth of field may appear in-focus in the image frame. In some non-limiting examples, a narrow depth of field for the first camera may be about the distance traveled by the vehicle traveling at a maximum rated speed between two frames being captured by the camera, such that a system may always have a minimum of one frame in focus for moving objects, or two frames in focus for stationary objects.

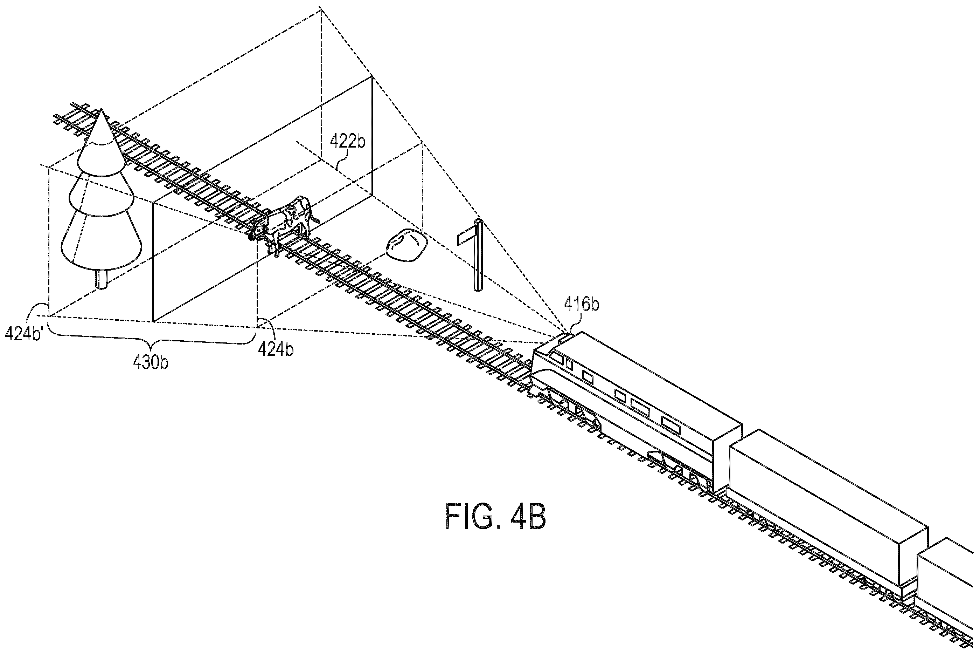

FIG. 4B illustrates an operation of an optical detector of the optical system having a wide depth of field **400b.** FIG. 4B depicts the vehicle that may travel along the path as in FIG. 4A. The vehicle may operate within the environment similar to that illustrated by **405** in FG. 4A, for example containing the same or similar static and/or dynamic objects.

The optical system of the vehicle may also include a second camera **406b** disposed thereon. The second camera may receive light from the environment, the light being directed by the optical components of the second camera onto the second camera imaging sensor. The light directed on the second camera imaging sensor may be converted to a second image frame defined by second image data by the second camera. A lens of the second camera may have a focal length **422b** also defining a focal plane. In one aspect, focal length **422a** may be the same as focal length **422b.** In another aspect, focal length **422a** may be different than focal length **422b.** The focal plane may intersect with any of the static or dynamic objects within the environment. As illustrated in FIG. 4B, the focal plane may intersect with the animal disposed on the path. The optical components of the first camera may define a second depth of field **430b.** As discussed above, the depth of field may be defined by planes (**424b**, **424b'**) parallel to and on opposing sides of the focal plane. As the width of the depth of field increases, more objects within the depth of field may appear in-focus in the image frame. Similarly, as the width of the depth of field decreases, fewer objects within the depth of field may appear in-focus in the image frame. In some non-limiting examples, a wide depth of field for the second camera may be about one and one-half times the focal length of the first camera. An onboard optical system of a vehicle, as disclosed above, may be used to detect an object within the environment of the vehicle, characterize the object, and then determine how the vehicle may operate in view of the object. In one example, the system may include a control circuit compose of a processor and a memory unit, in which the memory unit contains instructions for execution by the processor. As used herein, the terms "processor" and "computer," and related terms, e.g., "processing device," "computing device," and "controller" may be not limited to just those integrated circuits referred to in the art as a computer, but refer to a microcontroller, a microcomputer, a programmable logic controller (PLC), field programmable gate array, and application specific integrated circuit, and other programmable circuits. Suitable memory may include, for example, a computer-readable medium. Any programmed or programmable electronic device that can store, retrieve, and process data. "Software" or "computer program" as used herein includes, but is not limited to, one or more computer readable and/or executable instructions that cause a computer or other electronic device to perform functions, actions, and/or behave in a predetermined manner. The instructions may be embodied in various forms such as routines, algorithms, modules or programs including separate applications or code from dynamically linked libraries. Software may also be implemented in various forms such as a stand-alone program, a function call, a servlet, an applet, an application, instructions stored in a memory, part of an operating system or other type of executable instructions. A memory unit may include a computer-readable medium such as, for example, a random-access memory (RAM), a computer-readable non-volatile medium, such as a flash memory. The term "non-transitory computer-readable media" represents a tangible computer-based device implemented for short-term and long-term storage of information, such as, computer-readable instructions, data structures, program modules and sub-modules, or other data in any device. Therefore, the methods described herein may be encoded as executable instructions embodied in a tangible, non-transitory, computer-readable medium, including, without limitation, a storage device and/or a memory device. Such instructions, when executed by a processor, cause the processor to perform at least a portion of the methods described herein. As such, the term includes tangible, computer-readable media, including, without limitation, non-transitory computer storage devices, including without limitation, volatile and non-volatile media, and removable and non-removable media such as firmware, physical and virtual storage, CD-ROMS, DVDs, and other digital sources, such as a network or the Internet. "Non-transitory computer-readable media" include, but are not limited to, a CD-ROM, a removable flash memory card, a hard disk drive, a magnetic tape, and a floppy disk.

"Computer memory", as used herein, refers to a storage device that can store digital data or information which can be retrieved by a computer or processing element.

In one example, the instructions may cause the processor to receive first image data captured by a first camera disposed on the vehicle. In one example, light from the environment may impinge on the imaging sensor of the first camera. The onboard optical system may convert the light impinging on the imaging sensor to produce the first image data, for example in an electrical format, for transmission to the control circuit. The transmission of the first image data may be over a wired or wireless connection to the control circuit. Control signals to control the acquisition, transmission, and or format of the first image data may be received from the control circuit over one or more electronic components. The instructions may cause the detection of an object in a first in-focus region within a first image frame defined by the first image data. in which the first in-focus region may be based on a first depth of field (DoF). Objects may be detected, for example, based on edge data analysis of the image data. Edge detection may be accomplished by any appropriate means. For example, inter-pixel zero-crossing algorithms may be used to detect discontinuities in the brightness of neighboring pixels. Derivative gradient methods may be used as well to determine pixels representing an edge compared to neighboring pixels outside or inside of the edge. Edge expansion/thinning techniques may be used to detect continuous edges when small gaps between adjacent portions of an edge are present. Alternative methods (for example machine learning methods), disclosed in more detail below, may also be used to determine an in-focus region. In this example, the control circuit may detect an object based on a continuity of edges thus determined. In one aspect, an in-focus region may be determined based at lest in part on a thickness of the edges from the edge data analysis. For example, an edge having a thickness less than a determined value may be considered "in-focus." In one example, the determined value may be selected from a range of from about one pixel to about 5 pixels in width. In one aspect, the determined value may be based, at least in part, on the first depth of field (DoF) of the optical system, and/or the circle of confusion. The selection of the sensitivity may be static in some instances, and in others may be situation specific. In situation specific cases, various factors may be used to determine the value. For example, in lower light, fog, fouled optics, and lower vehicle speed situations, the determined value may be 10 pixels, while in better visibility or higher vehicle speed situations, the determine value may be 1 pixel (or vice versa).

The system may additionally receive second image data captured by a second camera disposed on the vehicle. The second image data may be captured in an analogous manner as disclosed above with respect to the first image data.

Based on the first image data, the system may detect the object in a second in-focus region within a second image frame defined by the second image data, in which the second in-focus region may be based on a second DoF. An object detected in the second image frame may be offset from the one found for the same object in the fist image frame. The offset may be determined, for example, based on the position and orientation of the optical axis of a lens in the second camera compared to that of the optical axis of a lens in the first camera. Again, AI analysis methods may be used to register the object from the first image frame in the second image frame. The determination of the second in-focus region may also rely upon methods disclosed above with respect to the determining of the first in-focus region. In one aspect, the second DoF may be greater than the first DoF.

The system may determine a characteristic of the object from the second image data. In some aspects, the characteristic may include a distance of the object from the vehicle, a location of the object within the environment visualized by the optical system (either in a relative or in an absolute frame of reference), an identification of the object, and/or a motion of the object with respect to the vehicle.

A distance of the object from the vehicle may be determined in part using the edge detection of the object in the first in-focus region in addition to information related to the position of the vehicle. As disclosed above, a distance of the object may be determined from the first image frame having a small DoF based on Eq. 1. The distance of the object may also include calculations the include the position of the vehicle. In one aspect, the position of the vehicle may be obtained from a combination of positioning data including, without limitation, a global navigation satellite system (GNSS), dead reckoning, or from previously detected off-board mile markers.

The location of the object within the environment may be determined based on the optical properties of the cameras such as focal length, DoF, and the geometry of the lens and imaging sensor. The location of the object may be determined in a relative coordinate system with respect to the vehicle, or an absolute coordinate system based on a known position of the vehicle.

An identification of the object may be determined according to one of several methods. In some examples, machine learning algorithms may be used to identify the object. In one aspect, the control circuit may have a local data collection system deployed that may use machine learning to enable derivation-based learning outcomes. The control circuit may learn from and make decisions on a set of data (including data provided by the various sensors), by making data-driven predictions and adapting according to the set of data. In aspects, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In aspects, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for vehicle performance and behavior analytics, and the like.

In one aspect, the control circuit may include a policy engine that may apply one or more policies. These policies may be based at least in part on characteristics of a given item of equipment or environment. With respect to control policies, a neural network can receive input of a number of environmental and task-related parameters. These parameters may include an identification of a determined trip plan for a vehicle group, data from various sensors, and location and/or position data. The neural network can be trained to generate an output based on these inputs, with the output representing an action or sequence of actions that the vehicle group may take to accomplish the trip plan. During operation of one aspect, a determination can occur by processing the inputs through the parameters of the neural network to generate a value at the output node designating that action as the desired action. This action may translate into a signal that causes the vehicle to operate. This may be accomplished via backpropagation, feed forward processes, closed loop feedback, or open loop feedback. Alternatively, rather than using backpropagation, the machine learning system of the control circuit may use evolution strategies techniques to tune various parameters of the artificial neural network. The control circuit may use neural network architectures with functions that may not always be solvable using backpropagation, for example functions that are non-convex. In one aspect, the neural network has a set of parameters representing weights of its node connections. A number of copies of this network are generated and then different adjustments to the parameters are made, and simulations are done. Once the output from the various models is obtained, they may be evaluated on their performance using a determined success metric. The best model may be selected, and the vehicle control circuit executes that plan to achieve the desired input data to mirror the predicted best outcome scenario. Additionally, the success metric may be a combination of the optimized outcomes, which may be weighed relative to each other. Suitable machine learning algorithms may identify the object based on a classifier trained to recognize images of various objects that may be encountered by the vehicle. Such algorithms may also be used to evaluate the edges of objects in the image frames and/or to determine an in-focus region in the image frames based at least in part on the thickness of the edges.

In one aspect, a motion of the object relative to the vehicle may be determined from sequential image frames from the cameras. The relative motion may be determined based on the location of the object in sequential frames, the relative sizes of the objects in sequential frames, and the known speed and heading of the vehicle between the sequential frames.

During operation, the system may transmit vehicular operational data to a vehicle controller, and such data may be based at least in part on the determined characteristic of the object. The term vehicle controller may refer to a person in direct control of the operations of the vehicle, an automated vehicle control system to control the operations of vehicle, or a combination of the two. In some examples, the automated vehicle control system may determine a transitional plan for changing movement of the vehicle system from a current state to a reduced state that complies with operational restrictions and may then automatically implement this transitional plan. Subsequently, the operational state may change again and operate in the original manner, or in a third and different manner. Further, in one aspect, the restriction may be a change that reduces operating speed in sequential steps based on additional inputs or as part of a gradual and controlled ramp down. For example, the automated vehicle control system may generate a plan or communicate with an energy management system (described below) to obtain a plan that dictates or designates different operational settings of the vehicle system at different locations, times, and/or distances along the route. Implementation of this plan can transition operation of the vehicle system from a current state (e.g., the speed at which the vehicle system was traveling prior to or at the time when the communication loss occurred) to a reduced state (e.g., the reduced speed limit). The control system may determine or obtain a return plan that dictates or designates different operational settings of the vehicle system at different locations, times, and/or distances along the route. Implementation of this return plan can transition operation of the vehicle system from the reduced state to another state, such as a prior state of the vehicle system, travel at the speed limit of the route (e.g., and not the reduced limit), or another state. These plans may be determined and/or implemented automatically (e.g., without operator intervention) to eliminate or reduce distraction to an operator of the vehicle system (relative to the operator manually determining or implementing the plans). In one aspect, the vehicle may be constrained to travel along a fixed path. Non-limiting examples of a fixed path may include a rail system, a highway system, a road, or an access path.

In one aspect, the vehicular operational data may include instructions to the controller of the vehicle to reduce a speed of the vehicle, change an operating mode of the vehicle, adjust a speed of the vehicle, actuate a notification device, adjust a speed of the vehicle, stop the vehicle, or re-route a heading of the vehicle. In one example, the operational data may cause the vehicle to reduce its speed, for example in a region of the path where the speed of the vehicle may be restricted due to weather conditions, path conditions, or at high population areas. Alternatively, the operational data may permit the speed of the vehicle to change (increase) where permitted by path conditions or weather conditions. For example, an operating mode of the vehicle may include a forward mode, a holding mode, or a reverse mode. In another example, a notification device may include a audible device (a horn) or a visual device (a light) indicating an approach of the vehicle to a determined location (for example, a crossing) or other infrastructure (for example a bridge or a tunnel). In another example, stopping the vehicle may entail directing a braking system to adjust the operation of braking devices in a consist to adjust braking distances between adjacent consist members. In yet another example, re-routing a heading of the vehicle may cause the vehicle to proceed to a different path or to a turn-out. The heading may also include a grade of the path or other indicators of an altitude of the vehicle or a change in altitude of the vehicle.

In one aspect, the characteristic of the object may be an object-identification characteristic. As discussed above, a machine learning algorithm may classify the object. The object may be classified as a static object or a dynamic object, based on sequential image frames. In one aspect, the object may be identified in an image frame and compared to objects found in previously recorded map files taken along the path the vehicle traverses. In one example, a location of the vehicle may be known from one of several indicators, for example through mile markers, dead reckoning, and GNSS receivers. The object in the image frame may be compared to the object in the map file at or near the vehicle location. The control circuit may then identify the object in the image frame based on metadata associated with the map file.

In one aspect, the operation of the cameras may include an image capture rate. Thus, the first camera may have a first image capture rate, and the second camera may have a second image capture rate. In one aspect, the first image capture rate and the second image capture rated may be pre-determined values Exemplary values of an image capture rate may include about 60 frames per second or about 120 frames per second, or a value or values therebetween. The image capture rate may further depend, at least in part, on the lens characteristics of the cameras and a maximum rated vehicle speed. In some examples, the image capture rate of the first camera may be the same as the image capture rate of the second camera. In alternative examples, the image capture rate of the first camera may differ from the image capture rate of the second camera. In some examples, one or more images captured from the first camera may be interleaved with one or more images captured from the second camera. The image capture rate of the first, or second, or both first and second cameras may depend on environmental conditions such as weather or illumination. The image capture rate of the first, or second, or both first and second cameras may also depend on a predetermined travel speed of the vehicle, such as a maximum speed of the vehicle.

In one aspect, the first image data may be sufficient to determine the characteristic of the object. For example, the first image data may be obtained at a narrow depth of field, in which the distance of an in-focus object to the vehicle may be determined (see Eq. 1, above). Alternatively, the first image data may be insufficient to determine the characteristic of the object without the second image data. For example, if the characteristic of the object is an identification of the object, first image data, based on a narrow depth of field, may not acquire sufficient information to identify the object.

In one aspect, the memory unit may include further instructions that, when executed by the processor, cause the processor to determine a distance of the object from the vehicle based at least in part on the first image data, for example by calculations related to Eq. 1, above. Further, based at least in part at least in part on the second image data, the memory unit may include instructions that, when executed by the processor, cause the processor to determine a location of the object relative to a position of the vehicle, or determine a speed and a trajectory of the object relative to a speed and a trajectory of the vehicle. Such determinations may further be based at least in part on a known location of the vehicle and/or a known speed and/or heading of the vehicle. For example, the instructions may also determine a location of the vehicle based at least in part at on a location entry in a database, or the second image data, or a combination thereof. A location data base may include locational information from a trip plan previously determined for the travel of the vehicle. Further, the instructions may also determine a speed and a direction of the vehicle based at least in part on the second image data. Additionally, the instructions may further cause the processor to calibrate the distance of the object from the vehicle based at least in part on a reference distance. Reference distance data may include data obtained from mile markers, dead reckoning, and GNSS receivers.

In one aspect, the optical system may include a third camera disposed on the vehicle, in which the first camera has a first lens having a first optical axis, the second camera has a second lens having a second optical axis, and the third camera has a third lens having a third optical axis diverging vertically from the first optical axis and the second optical axis. The third camera may have a depth of field equal to either the first depth of field or the second depth of field. Alternatively, the third camera may have a depth of field different from both the first depth of field and the second depth of field. Additionally, the memory unit may include instructions that, when executed by the processor, cause the processor to receive third image data captured by the third camera. In one aspect, the first DoF and the second DoF may be dependent on a maximum travel speed of the vehicle.

In another aspect of the use of an optical system by a vehicle, the system may include a control circuit composed of a processor and a memory unit. The memory unit may include instructions that, when executed by the processor, cause the processor to receive image data captured by a camera disposed on a vehicle, detect an object in an in-focus region within an image frame defined by the image data, the in-focus region based on a depth of field (DoF) insufficient to identify the object, determine a characteristic of the object from the image data, and

transmit to a controller of the vehicle, vehicular operational data based at least in part at least in part on the determined characteristic of the object. In one aspect, the characteristic may include a distance of the object from the vehicle.

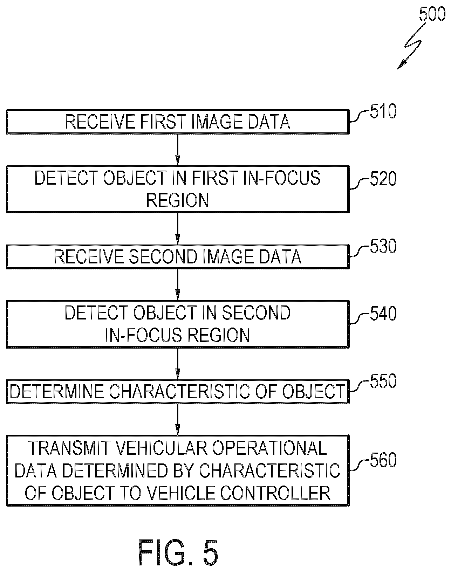

In one aspect, the vehicular operational data may include instructions to the controller of the vehicle to reduce a speed of the vehicle, change an operating mode of the vehicle, adjust a speed of the vehicle, actuate a notification device, adjust a speed of the vehicle, actuate a notification device, stop the vehicle, or re-route a heading of the vehicle. For example, an operating mode of the vehicle may include a forward mode or a reverse mode. In another example, stopping the vehicle may entail directing a braking system to adjust the operation of braking devices in a consist to adjust braking distances between adjacent consist members. In yet another example, re-routing a heading of the vehicle may cause the vehicle to proceed to a different path or to a turn-out. The heading may also include a grade of the path or other indicators of an altitude of the vehicle or a change in altitude of the vehicle. FIG. 5 depicts a flow chart 500 of a method for detecting an object and determining its distance from the vehicle.

The method may include receiving 510, by a control circuit, first image data captured by a first camera disposed on a vehicle. The method may further include detecting 520, by the control circuit, an object in a first in-focus region within a first image frame. The first image frame may be defined by the first image data, and the first in-focus region may be based on a first depth of field (DoF). Additionally, the method may include receiving 530, by the control circuit, second image data captured by a second camera disposed on the vehicle. The method may also include detecting 540, by the control circuit, the object in a second in-focus region within a second image frame. In one aspect, the object may be detected in the second in-focus region based on the first image data. The second in-focus region may be defined by the second image data. The second in-focus region may also be based on a second DoF greater than the first DoF. The method may further include determining 550 by the control circuit, a characteristic of the object from the second image data. The method may additionally include transmitting 560 vehicular operational data, by the control circuit to a controller of the vehicle. The vehicular operational data may be determined at least in part by the characteristic of the object. The vehicle controller, either in manual, semi-automated, or automated mode, may use the vehicular operational data to control one or more operations of the vehicle.

In an additional aspect, the method may further include determining, by the control circuit, a distance of the object from the vehicle. In one aspect, the determined distance may be based at least in part least in part on the first image data, as disclosed above. Further, the method may include identifying the object by the control circuit. The identification may be based at least in part least in part on the second image data.

In a further aspect, the method may include determining a position of the object relative to the vehicle. The position of the object relative to the vehicle may be based at least in part least in part on the second image data, as disclosed above. Additionally, the method may include determining, by the control circuit, a velocity and direction of motion of the object relative to the vehicle. The velocity and/or motions of the object relative to the vehicle may be based at least in part at least in part on the second image data, as disclosed above.

In yet another aspect, the method may include determining a position of the vehicle based at least in part at least in part on the second image data, as disclosed above. Additionally, the method may include determining a velocity and direction of motion of the vehicle based at least in part at least in part on the second image data, as disclosed above.

This written description uses examples to disclose the invention and to enable a person of ordinary skill in the relevant art to make and practice the invention, including making and using any devices or systems and performing any incorporated methods. The patentable scope of the invention is defined by the claims. Such other examples are within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application.

**Claims**

1. A system, comprising:
   a control circuit configured to:

   receive first image data captured by a first camera disposed on a vehicle;
   detect an object in a first in-focus region within a first image frame defined by the first image data, the first in-focus region based on a first depth of field (DoF);
   receive second image data captured by a second camera disposed on the vehicle;
   based on the first image data, detect the object in a second in-focus region within a second image frame defined by the second image data, the second in-focus region based on a second DoF greater than the first DoF;
   determine a characteristic of the object from the second image data; and
   transmit to a controller of the vehicle, vehicular operational data based at least in part on the determined characteristic of the object.

2. The system of claim 1, wherein the first camera comprises a first lens having a first local length, and the second camera comprises a second lens having a second focal length different than the first focal length.

3. The system of claim 1, wherein the control circuit responds to the vehicular operational data to:

   actuate a notification device;
   re-route the vehicle; or
   change a heading of the vehicle.

4. The system of claim 1, wherein the control circuit responds to the vehicular operational data to change an operating mode of the vehicle.

5. The system of claim 1, wherein the characteristic of the object is an object-identification characteristic.

6. The system of claim 1, wherein the first camera has a first image capture rate, the second camera has a second image capture rate, and the first image capture rate and the second image capture rate are based at least in part on a predetermined travel speed of the vehicle.

7. The system of claim 1, wherein the first image data is insufficient to determine the characteristic of the object without the second image data.

8. The system of claim 1, wherein the control circuit determines a distance of the object from the vehicle based at least in part on the first image data.

9. The system of claim 8, wherein, based at least in part on the second image data, the control circuit determines one or both of:

   a location of the object relative to a position of the vehicle, and
   a speed and a trajectory of the object relative to a speed and a trajectory of the vehicle.

10. The system of claim 8, wherein the control circuit determines one or both of:

    a location of the vehicle based at least in part on a location entry in a database, or the second image data, or a combination thereof, and
    a speed and a direction of the vehicle based at least in part on the second image data.

11. The system of claim 8, wherein the control circuit calibrates the distance of the object from the vehicle based at least in part on a reference distance.

**12.** The system of claim 1, further comprising a third camera disposed on the vehicle, wherein:

the first camera comprises a first lens having a first optical axis;
the second camera comprises a second lens having a second optical axis;
the third camera comprises a third lens having a third optical axis diverging vertically from the first optical axis and the second optical axis; and
the control circuit receives third image data captured by the third camera.

**13.** The system of claim 1, wherein the first DoF and the second DoF are dependent on a maximum travel speed of the vehicle.

**14.** A system, comprising:
a control circuit configured to:

receive image data captured by a camera disposed on a vehicle;
detect an object in an in-focus region within an image frame defined by the image data, the in-focus region based on a depth of field (DoF) insufficient to identify the object;
determine a characteristic of the object from the image data; and
transmit to a controller of the vehicle, vehicular operational data based at least in part at least in part on the determined characteristic of the object.

**15.** The system of claim 14, wherein the characteristic comprises a distance of the object from the vehicle.

**16.** The system of claim 15, wherein the control circuit responds to the vehicular operational data to adjust a speed of the vehicle, actuate a notification device, reroute the vehicle, or change a heading of the vehicle.

**17.** A method, comprising:

receiving first image data captured by a first camera disposed on a vehicle;
detecting an object in a first in-focus region within a first image frame defined by the first image data, the first in-focus region based on a first depth of field (DoF);
receiving second image data captured by a second camera disposed on the vehicle;
detecting based on the first image data, the object in a second in-focus region within a second image frame defined by the second image data, the second in-focus region based on a second DoF greater than the first DoF;
determining a characteristic of the object from the second image data;

generating vehicular operational data determined at least in part by the characteristic of the object; and
controlling the vehicle based at least in part on the vehicular operational data.

**18.** The method of claim 17, further comprising:

determining a distance of the object from the vehicle, based at least in part least in part on the first image data; and
identifying the object based at least in part least in part on the second image data.

**19.** The method of claim 18, further comprising one or both of:

determining a position of the object relative to the vehicle, based at least in part least in part on the second image data; and
determining a velocity and direction of motion of the object relative to the vehicle, based at least in part at least in part on the second image data.

**20.** The method of claim 18, further comprising one or both of:

determining a position of the vehicle based at least in part on the second image data; and
determining a velocity and direction of motion of the vehicle based at least in part on the second image data.

FIG. 1

EP 4 700 720 A1

FIG. 2A

FIG. 2B

EP 4 700 720 A1

FIG. 3

EP 4 700 720 A1

FIG. 4A

FIG. 4B

EP 4 700 720 A1

EP 4 700 720 A1

500

```
┌─────────────────────────────────────┐
│       RECEIVE FIRST IMAGE DATA       │──510
└─────────────────────────────────────┘
                    │
                    ▼
┌─────────────────────────────────────┐
│     DETECT OBJECT IN FIRST IN-FOCUS  │──520
│                REGION                │
└─────────────────────────────────────┘
                    │
                    ▼
┌─────────────────────────────────────┐
│      RECEIVE SECOND IMAGE DATA       │──530
└─────────────────────────────────────┘
                    │
                    ▼
┌─────────────────────────────────────┐
│       DETECT OBJECT IN SECOND        │──540
│            IN-FOCUS REGION           │
└─────────────────────────────────────┘
                    │
                    ▼
┌─────────────────────────────────────┐
│    DETERMINE CHARACTERISTIC OF OBJECT│──550
└─────────────────────────────────────┘
                    │
                    ▼
┌─────────────────────────────────────┐
│    TRANSMIT VEHICULAR OPERATIONAL    │
│ DATA DETERMINED BY CHARACTERISTIC    │──560
│  OF OBJECT TO VEHICLE CONTROLLER     │
└─────────────────────────────────────┘
```

## FIG. 5

Europäisches
Patentamt

European
Patent Office

Office européen
des brevets

## EUROPEAN SEARCH REPORT

**Application Number**

EP 25 19 6851

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/330526 A1 (CORCORAN PETER [IE]) 15 November 2018 (2018-11-15) * 5, 7, 34, 39, 41, 53-55, 78, 83, 89-93, 96, 102, 106, 108; figures 1B, 3, 5 * ----- | 1-20 | INV. G06V20/56 |

**TECHNICAL FIELDS SEARCHED (IPC)**

G06V

The present search report has been drawn up for all claims

| Place of search | Date of completion of the search | Examiner |
|---|---|---|
| The Hague | 18 November 2025 | Grigorescu, Simona |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 25 19 6851**

This annex lists the patent family members relating to the patent documents cited in the above-mentioned European search report.
The members are as contained in the European Patent Office EDP file on
The European Patent Office is in no way liable for these particulars which are merely given for the purpose of information.

**18-11-2025**

| Patent document cited in search report | Publication date | Patent family member(s) | Publication date |
|---|---|---|---|
| US 2018330526 A1 | 15-11-2018 | NONE | |

EPO FORM P0459

For more details about this annex : see Official Journal of the European Patent Office, No. 12/82